Europäisches Patentamt

European Patent Office

Office européen des brevets

(19)

(11) Numéro de publication : **0 239 448**
**B1**

(12) **FASCICULE DE BREVET EUROPÉEN**

(45) Date de publication du fascicule du brevet :
11.10.89

(51) Int. Cl.⁴ : **B 60 K 15/06**

(21) Numéro de dépôt : **87400413.8**

(22) Date de dépôt : **24.02.87**

(54) Dispositif de puisage et de jaugeage de carburant liquide pour réservoir de véhicule automobile.

(30) Priorité : 14.03.86 FR 8603673

(43) Date de publication de la demande :
30.09.87 Bulletin 87/40

(45) Mention de la délivrance du brevet :
11.10.89 Bulletin 89/41

(84) Etats contractants désignés :
DE GB IT

(56) Documents cités :
GB—A— 453 677
US—A— 4 306 579
PATENT ABSTRACTS OF JAPAN, vol. 9, no. 242 (M-417)[1965], 28 septembre 1985; & JP-A-60 94 819 (MAZDA K.K.) 28-05-1985
PATENT ABSTRACTS OF JAPAN, vol. 6, no. 253 (M-178)[1131], 11 décembre 1982; & JP-A-57 147 929 (NISSAN JIDOSHA K.K.) 13-09-1982

(73) Titulaire : AUTOMOBILES PEUGEOT
75, avenue de la Grande Armée
F-75116 Paris (FR)

AUTOMOBILES CITROEN
62 Boulevard Victor-Hugo
F-92200 Neuilly-sur-Seine (FR)

(72) Inventeur : Barillier, Jacques
55, rue de Mareil
F-78100 Saint-Germain-en-Laye (FR)
Inventeur : Ghouin, Michel
21 Bis, Av. du Maréchal Joffre
F-78800 Houilles (FR)
Inventeur : Guinet, Claude
17, rue Pierre Brossolette
F-78330 Fontenay le Fleury (FR)

(74) Mandataire : Bressand, Georges et al
c/o CABINET LAVOIX 2 Place d'Estienne d'Orves
F-75441 Paris Cédex 09 (FR)

## Description

La présente invention a pour objet un dispositif de puisage et de jaugeage du carburant liquide contenu dans un réservoir équipant un véhicule automobile, dans le cas où le fond du réservoir présente une importante proéminence interne délimitant deux portions inférieures. Cette proéminence correspond notamment à une dépression extérieure laissant place à un arbre de transmission situé à peu près au droit du fond du réservoir.

Un dispositif usuel comportant un conduit d'aspiration et un capteur de niveau associés à l'une des deux portions inférieures n'est pas satisfaisant, car il ne permet pas de puiser et de jauger le carburant contenu dans l'autre portion inférieure quand le niveau est plus bas que le sommet de la proéminence.

On connaît un dispositif assurant le puisage du liquide contenu dans deux réservoirs au moyen de deux conduits d'aspiration associés respectivement à chacun des réservoirs et raccordés à une vanne de commutation qui relie alternativement l'un ou l'autre de ces conduits à une canalisation d'alimentation du moteur du véhicule, et qui est commutée par le conducteur quand l'un des réservoirs est vide.

Un tel dispositif présente l'inconvénient d'impliquer une manœuvre critiquable pour un véhicule moderne et son adaptation à un réservoir à deux portions inférieures ne conviendrait pas du fait que le carburant va et vient généralement d'une portion à l'autre en raison des mouvements et des secousses du véhicule.

L'invention a pour but d'assurer, dans un véhicule automobile et sans intervention de son conducteur, un puisage et un jaugeage satisfaisants du carburant contenu dans un réservoir comportant deux portions inférieures.

Le dispositif de puisage et de jaugeage pour réservoir visé par l'invention comporte un capteur de niveau variable et un conduit d'aspiration associés à l'une des deux portions inférieures.

Suivant l'invention, ce dispositif comprend, d'une part un second capteur de niveau variable et un second conduit d'aspiration associé à l'autre portion inférieure, les deux conduits étant raccordés à une électrovanne de commutation les reliant alternativement à une canalisation d'alimentation du moteur du véhicule, d'autre part un capteur de niveau minimal du liquide contenu dans l'une des deux portions, ce capteur étant relié électriquement à l'électrovanne de façon que celle-ci assure la communication avec la portion associée à ce capteur ou avec l'autre portion selon que ce capteur détecte un niveau de liquide supérieur ou inférieur à un niveau minimal donné.

Selon d'autres particularités avantageuses de l'invention :

le conduit de remplissage du réservoir et éventuellement un conduit de retour de carburant débouchent dans ou au-dessus de l'autre portion que celle associée au capteur de niveau minimal ;

les deux capteurs de niveau variable comportant chacun une résistance variable, les deux résistances sont branchées en série avec un dispositif d'alimentation d'un indicateur de jauge ;

le capteur de niveau minimal comporte un contact assurant, quand le niveau de liquide dans la portion associée est minimal, la fermeture d'un circuit électrique d'excitation de l'électrovanne et d'une lampe-témoin ;

en variante, un capteur de niveau bas est associé à l'autre portion que celle associée au capteur de niveau minimal et comporte un contact assurant, quand le niveau de liquide est inférieur à un seuil déterminé, la fermeture d'un circuit électrique d'excitation d'une lampe-témoin.

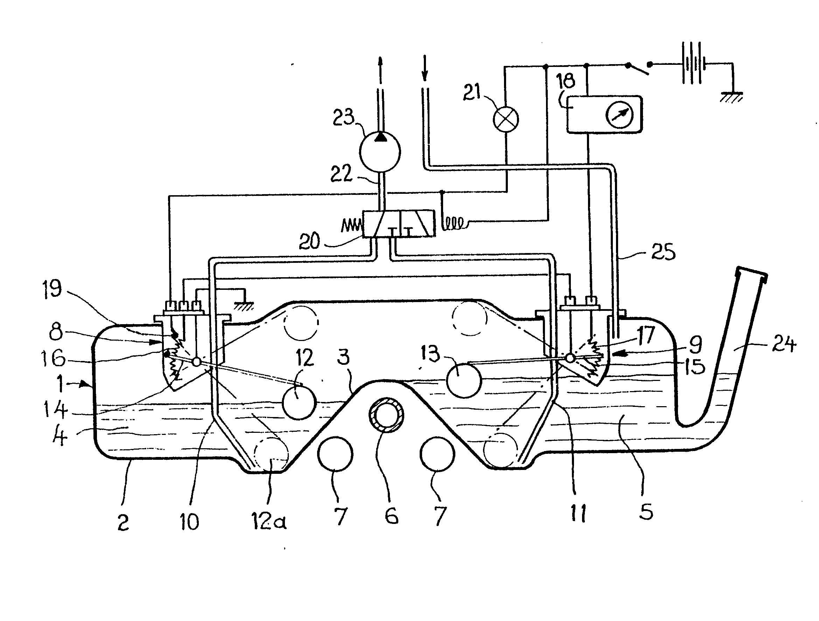

Un exemple de réalisation d'un dispositif de puisage et de jaugeage selon l'invention est décrit ci-après, avec référence au dessin annexé, qui comprend une seule figure représentant, de façon simplifiée et en coupe par un plan vertical, un réservoir de véhicule automobile équipé d'un mode de réalisation du dispositif selon l'invention, lui même représenté en partie schématiquement.

On voit sur cette figure un réservoir 1 dont le fond 2 comporte un renflement central qui forme à l'intérieur du réservoir 1 une proéminence 3 délimitant deux portions inférieures 4, 5 et à l'extérieur une dépression laissant place, en les entourant partiellement, à un arbre de transmission 6 et à deux conduits d'échappement 7 du véhicule.

A chacune des portions 4, 5 sont associés respectivement un capteur de niveau variable 8, 9 et un conduit d'aspiration 10, 11. Chaque capteur comporte un flotteur 12, 13 solidaire d'un curseur 14, 15 coopérant avec une résistance variable 16, 17. Les deux résistances 16, 17 sont branchées en série avec un dispositif usuel 18 d'alimentation d'un indicateur de jauge.

Le curseur 14 associé à la portion 4 est électriquement relié à la masse et propre à coopérer avec un contact 19 quand le flotteur 12 est en position inférieure 12a, constituant ainsi un capteur de niveau minimal. Le contact 19 est relié au circuit d'excitation d'une électrovanne de commutation 20 et d'une lampe témoin 21.

A cette électrovanne 20 sont raccordés d'une part une canalisation 22 d'alimentation du moteur du véhicule, d'autre part les deux conduits d'aspiration 10, 11. Elle est agencée de manière à faire communiquer la canalisation 22 alternativement avec le conduit 10 ou avec le conduit 11 selon qu'elle est au repos ou excitée, une pompe 23 sur la canalisation 22 aspirant ainsi du carburant alternativement dans la portion 4 ou dans la portion 5.

Une goulotte de remplissage 24 et un conduit de retour de carburant 25 débouchent respectivement dans et au-dessus de la portion 5.

Quand le niveau de carburant est au-dessus du sommet de la proéminence 3 et tant qu'il reste du carburant dans la portion 4, le contact 14, 19 est ouvert et l'électrovanne 20 est donc au repos, assurant l'aspiration par le conduit 10 seulement. Le carburant s'évacue de la portion 4 et reste dans la portion 5, comme visible sur la figure.

Quand le niveau de carburant dans la portion 4 atteint son minimum, le flotteur 12 parvient à sa position inférieure 12a et le contact 14, 19 se ferme, provoquant l'excitation de la lampe-témoin 21 et de l'électrovanne 20. Celle-ci assure dès lors l'aspiration, par le conduit 11, du carburant contenu dans la portion 5, et la lampe-témoin 21 allumée indique au conducteur du véhicule que la quantité de carburant restant dans le réservoir 1 est inférieure à une valeur correspondant à la capacité de la portion 5. Si une partie du carburant contenu dans cette portion 5 se déverse dans l'autre portion 4 par suite d'une inclinaison ou de secousses du véhicule, le carburant retrouvant place dans la portion 4 soulève le flotteur 12 et provoque l'ouverture du contact 14, 19, donc le retour de l'électrovanne 20 à sa position de repos, assurant l'aspiration par le conduit 10 jusqu'à ce que la portion 4 soit de nouveau vidée. On voit qu'ainsi tout le carburant contenu dans le réservoir peut être aspiré — ou puisé — par la pompe 23, sans intervention du conducteur du véhicule.

Par ailleurs, les deux résistances variables 16, 17 étant montées en série avec l'indicateur 18, celui-ci est sensible à la somme des deux résistances, donc à la quantité totale de carburant restant dans le réservoir, même si les niveaux sont différents au droit des deux portions 4 et 5. Le jaugeage est par suite satisfaisant même lorsque le réservoir 1 est incliné ou lorsqu'une faible quantité restante de carburant se trouve inégalement répartie dans les deux portions inférieures.

Une variante non représentée concernant la lampe-témoin 21 est utilisée si la capacité de la portion 5 est relativement grande. Le circuit d'alimentation de cette lampe est alors relié non pas au capteur 14, 19 mais à un capteur de niveau bas associé à la portion 5, ce capteur comportant un contact qui assure la fermeture dudit circuit, donc l'allumage de la lampe quand le niveau de liquide dans cette portion est inférieur à un seuil déterminé. Ce capteur de niveau bas est avantageusement combiné avec le capteur 9 comme le capteur de niveau minimal 14, 19 avec le capteur 8.

**Revendications**

1. Dispositif de puisage et de jaugeage du carburant liquide contenu dans un réservoir (1) de véhicule automobile, dont un fond (2) présente une proéminence interne (3) délimitant deux portions inférieures (4, 5), ce dispositif comportant d'une part un capteur de niveau variable (8, 9) et un conduit d'aspiration (10, 11) associés à chacune des deux portions inférieures précitées (4, 5) et d'autre part un capteur de niveau minimal (14, 19) du liquide contenu dans l'une (4) des deux portions, caractérisé en ce qu'il comprend une électrovanne (20) de commutation reliant alternativement les deux conduits (10, 11) à une canalisation (22) d'alimentation du moteur du véhicule, et en ce que le capteur de niveau minimal (14, 19) est électriquement relié à l'électrovanne (20) de façon que celle-ci assure la communication avec la portion (4) associée à ce capteur ou avec l'autre portion (5), selon que ce capteur détecte un niveau de liquide supérieur ou inférieur à un niveau minimal donné.

2. Dispositif selon la revendication 1, caractérisé en ce que le capteur de niveau minimal comporte un contact (19) assurant, quand le niveau de liquide dans la portion associée (4) est minimal, la fermeture d'un circuit électrique d'excitation de l'électrovanne (20) et d'une lampe-témoin (21).

3. Dispositif selon l'une des revendications 1 et 2, caractérisé en ce qu'un capteur de niveau bas est associé à l'autre portion (5) que celle associée au capteur de niveau minimal (14, 19) et comporte un contact assurant, quand le niveau de liquide dans cette autre portion (5) est inférieur à un seuil déterminé, la fermeture d'un circuit d'alimentation d'une lampe-témoin.

**Claims**

1. A device for drawing up and measuring the liquid fuel contained in a tank (1) in a motor vehicle, and a bottom (2) of which comprises an internal protuberance (3) bounding two bottom portions (4, 5), the said device comprising on the one hand a variable level sensor (8, 9) and a suction pipe (10, 11) associated with each of the aforesaid two lower portions (4, 5) and, on the other, a minimum level sensor (14, 19) for detecting the liquid contained in one (4) of the two portions, characterised in that it comprises an electrically operated selector valve (20) which alternately links the two pipes (10, 11) to a pipe (22) supplying the vehicle engine, and in that the minimum level sensor (14, 19) is electrically connected to the electrically operated valve (20) so that this latter provides communication with that portion (4) which is associated with this sensor or with the other portion (5), according to whether the sensor detects a liquid level greater or less than a given minimum level.

2. A device according to Claim 1, characterised in that the minimum level sensor comprises a contact (19) which, when the level of liquid in the associated portion (4) is at the minimum, has the effect of closing an electric circuit for energising the electrically operated valve (20) and actuating a warning light (21).

3. A device according to one of Claims 1 and 2, characterised in that a low level sensor is associated with the other portion (5) than that associated with the minimum level sensor (14, 19) and comprises a contact which, when the liquid level in this other portion (5) is below a specific threshold, provides for closure of a circuit feeding a warning light.

## Patentansprüche

1. Vorrichtung zum Ansaugen und Beurteilen des Pegels eines flüssigen Kraftstoffes, der im Tank (1) eines Kraftfahrzeuges enthalten ist, dessen Boden (2) einen inneren Vorsprung (3) aufweist, der zwei tiefere Teile (4, 5) begrenzt, welche Vorrichtung einerseits einen Meßfühler für einen variablen Pegel (8, 9) und eine Ansaugleitung (10, 11), die jeweils jedem der beiden tieferen Teile (4, 5) zugeordnet ist, und andererseits einen Meßfühler für einen kleinsten Pegel (14, 19) der Flüssigkeit in einem (4) der beiden Teile aufweist, dadurch gekennzeichnet, daß sie ein Elektroschaltventil (20) aufweist, das abwechselnd die beiden Leitungen (10, 11) mit einem Ansaugkanal (22) der Maschine des Fahrzeuges verbindet, und der Meßfühler für den kleinsten Pegel (14, 19) elektrisch mit dem Elektroventil (20) so verbunden ist, daß dieses eine Verbindung mit dem Teil (4), der diesem Meßfühler zugeordnet ist, oder mit dem anderen Teil (5) herstellt, je nachdem, ob der Meßfühler einen Pegel der Flüssigkeit über oder unter einem gegebenen kleinsten Pegel feststellt.

2. Vorrichtung nach Anspruch 1, dadurch gekennzeichnet, daß der Fühler für den kleinsten Pegel einen Kontakt (19) aufweist, der dann, wenn der Pegel der Flüssigkeit im zugeordneten Teil (4) am kleinsten ist, einen elektrischen Schaltkreis zum Erregen des Elektroventils (20) und einer Kontrollampe (21) schließt.

3. Vorrichtung nach einem der Ansprüche 1 und 2, dadurch gekennzeichnet, daß ein Meßfühler für einen niedrigen Pegel im anderen Teil (5) als dem Teil zugeordnet ist, dem der Meßfühler für den kleinsten Pegel (14, 19) zugeordnet ist, und einen Kontakt aufweist, der dann, wenn der Pegel der Flüssigkeit in diesem anderen Teil (5) unter einem bestimmten Schwellenwert liegt, einen Versorgungsschaltkreis einer Kontrollampe schließt.